# EUROPEAN PATENT SPECIFICATION

(11) **EP 2 681 688 B1**
(45) Date of publication and mention of the grant of the patent: **11.11.2020**
(21) Application number: 12752440.3
(22) Date of filing: 02.03.2012
(51) Int. Cl.: G06F 21/33, G06F 21/41, H04L 29/06, H04L 29/08

(54) **SHARING USER ID BETWEEN OPERATING SYSTEM AND APPLICATION**
GEMEINSAME NUTZUNG EINER BENUTZER-ID DURCH EIN BETRIEBSSYSTEM UND EINE ANWENDUNG
PARTAGE D'UN ID D'UTILISATEUR ENTRE UN SYSTÈME D'EXPLOITATION ET UNE APPLICATION

(30) Priority: 03.03.2011 US 201113039469
(43) Date of publication of application: 08.01.2014
(73) Proprietor: Microsoft Technology Licensing, LLC, Redmond, WA 98052 (US)
(72) Inventor: OBASANJO, Oludare Victor, Redmond, Washington 98052-6399 (US); FLEISCHMAN, Eric, Redmond, Washington 98052-6399 (US); FAULKNER, Sarah, Redmond, Washington 98052-6399 (US); PARKER, Christopher, Redmond, Washington 98052-6399 (US); KANAZAWA, Keiji, Redmond, Washington 98052-6399 (US)
(74) Representative: Goddar, Heinz J.
(86) International application number: PCT/US2012/027544
(87) International publication number: WO 2012/119101

(56) References cited:
- WO-A1-2006/004815
- WO-A2-2005/008456
- US-A1- 2007 083 750
- US-A1- 2008 059 804
- US-A1- 2010 115 114
- US-A1- 2010 229 224
- US-B1- 6 275 944

## Description

### BACKGROUND

In a computing environment, users can connect with online services, such as over the Internet or some other network. Online services can comprise email services, social networks, file storage, management and collaboration services, games, entertainment, and a plurality of other services and online applications. Further, users may utilize applications on a device that communicates with an online component, such as a remote server provided by the application provider. When connecting to an online service and/or application, a user may be asked to register an identity, which can include user-related information and/or security information used to authenticate the user with the service. Often, the user may be asked to provide a username and a shared secret, such as a password, to associate with their online identity, and/or a two factor authentication, for example, which can be used by the online service provider to authenticate the user.

WO 2005/008456 A2 discloses a client operating system hosting a client security mechanism from which credentials are obtained for a sign-on. Credentials are provided by a user, and are stored.

US 6 275 944 B1 discloses user-specific application data which includes a user's password. If a user logs on to a local device, an authentication module is to authenticate the user to an authentication service.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

Some websites and/or online services allow a user to sign-on to their site using an identity from an unaffiliated website or service. For example, some websites allow a user to authenticate their identity using a user identity associated with a social network site. For example, social network sites and/or other identity providers, for example, may register users with a username and password, and sometimes

It will be appreciated that while a social network site and/or the like may be referenced herein, that these are merely examples of identity providers and/or the like and that the application, including the scope of the appended claims, is not intended to be limited to the specific examples mentioned. In this example, the website may be running an application from the social network site, and/or may contact the social network site when the user selects that login option. The social network site can provide a login user interface to be rendered on the user's device, for example, and the user can enter their log in credentials. In this example, the social network site authenticates the user and (provided the authentication is successful) communicates with the website to let the website know that the user is authenticated. However, for this type of user authentication to work, such as in an application that does not run in the browser, a cloud-based identity service provider for the user needs to be running on the user's device (e.g., in the browser) and/or an application for the user's cloud-based identity service provider needs to be invokable by the application wishing to authenticate the user.

Accordingly, one or more techniques and/or systems are disclosed where a user can sign-in to their device (e.g., handheld computer, smartphone, portable device, laptop, desktop computer, etc.) using a cloud based identity, which may also be used to sign into multiple websites or apps. As an example, when an application (e.g., device-based app, web-app, browser/website, etc.) that supports cloud based identities runs on the device, the application may ask the operating system of the device for an identity token. In this example, if the user grants access to this identity token, the app can then send this identity token to its servers which can then validate the token, verify the user's identity and then return relevant data, for example. In this way, the user may not need to perform a second log-in transaction after performing an initial log-in transaction on the device, and the identity service may not need to run in the background of the device to authenticate the user.

In one embodiment for authenticating a user of an application using an operating system, the user authenticates with the operating system, such as resident on the device, using a cloud-based identity for the user (e.g., one used by the user for accessing an online service). Further, an authentication token for the user's cloud-based identity is provided to the application upon request to the operating system, if the user is authenticated by the operating system. Additionally, the authentication token is used to authenticate the user for the application, where the application supports the use of the cloud-based ID of the user.

To the accomplishment of the foregoing and related ends, the following description and annexed drawings set forth certain illustrative aspects and implementations. These are indicative of but a few of the various ways in which one or more aspects may be employed. Other aspects, advantages, and novel features of the disclosure will become apparent from the following detailed description when considered in conjunction with the annexed drawings.

### DESCRIPTION OF THE DRAWINGS

Fig. 1 illustrates an embodiment of existing technology for authenticating a user of an online service using an online identity.
Fig. 2 is a flow diagram illustrating an exemplary method for authenticating a user of an application using an operating system.
Fig. 3 is a flow diagram illustrating one embodiment where one or more portions of one or more techniques described herein may be implemented.
Fig. 4 is a flow diagram illustrating one embodiment where one or more portions of one or more techniques described herein may be implemented.
Fig. 5 is a component diagram illustrating an exemplary system for authenticating a user of an application using an operating system.
Fig. 6 is a component diagram illustrating one embodiment where one or more systems described herein may be implemented.
Fig. 7 is an illustration of an exemplary computer-readable medium comprising processor-executable instructions configured to embody one or more of the provisions set forth herein.
Fig. 8 illustrates an exemplary computing environment wherein one or more of the provisions set forth herein may be implemented.

### DETAILED DESCRIPTION

The claimed subject matter is now described with reference to the drawings, wherein like reference numerals are used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

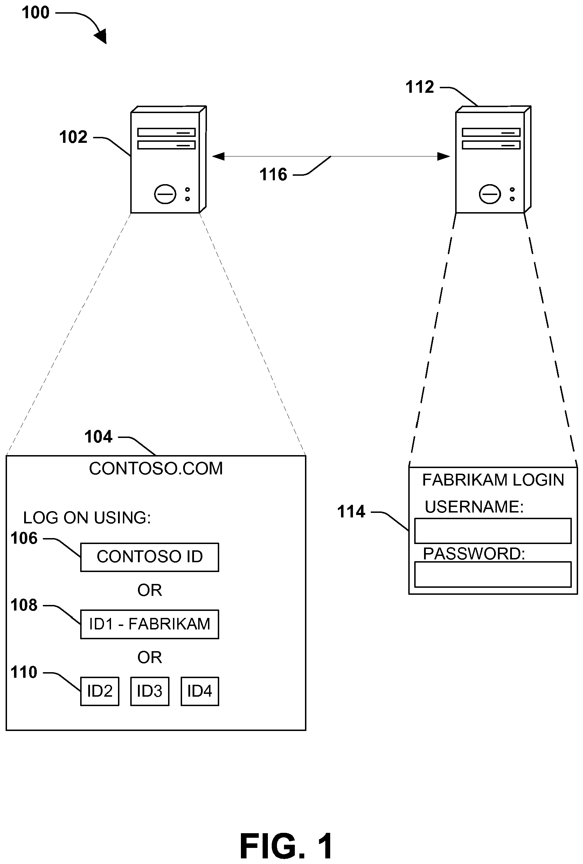

Fig. 1 illustrates an embodiment 100 of existing technology for authenticating a user of an online service using an online identity. For example, the user may have an online association with a first web-based service, such as "fabrikam.com", which may comprise a social networking site, email service provider, online service aggregator, or other cloud-based (e.g., online, such as on the Internet, an intranet, local or wide network, etc.) service provider. In this example, the association with the online service 112 can comprise providing an authentication identity 114 when registering with the service 112, such as by creating a username and associated secret key (e.g., password). Further, the online service 112 may ask the user to include additional security with their online ID, such as one or more security questions, images, or other forms of security (e.g., encrypted keys).

In this embodiment 100, the user can navigate to another domain 102, such as "contoso.com" and log-on, or register as a user on that site 102, for example. When logging onto the site, or registering, the website domain may provide a webpage 104 that provides for several alternates for logging in. As an example, the user may utilize the website's log-in identity 106, or may log in using another online identity 108, 110, such as the user identity 108 created for the "fabrikam.com" website 112. Further, additional user identities 110 may be used to log onto contoso.com 104, for example.

Typically, when the user chooses another online identity 108, 110 to log into a website 102, the website may communicate 116 with the other identity provider, such as the service 112. In this example, contoso.com displays buttons (e.g., 108, 110) that allow the user to select another online identity with which to log in to the site 102. The user can select the fabrikam.com online identity 108, and the website 102 will communicate 116 with fabrikam.com to provide login credentials, for example. In one embodiment, a fabrikam application may be running on contoso.com, and/or a typical fabrikam.com login screen 114 may be invoked and provided to the user, where they can enter their fabrikam.com identity credentials. Once the user is authenticated by fabrikam.com, the fabrikam.com website can communicate 116 to the contoso.com website 102 indicating that the user is authenticated, for example, and may be allowed to login to contoso.com.

A method may be devised that provides for a user signing on to their device, for example, with a user's cloud-based identity (e.g., from fabrikam.com), and then using that authentication to automatically sign into other applications and/or websites. As an example, instead of logging onto contoso.com by invoking the fabrikam.com authentication, and communicating with the online website to authenticate the user, the user device's operating system may provide authentication for the user to log into an application, and/or a website. The operating system may merely identify the user to the website and/or application when asked to authenticate the user, after the user has logged onto the device using some cloud-based identity, for example.

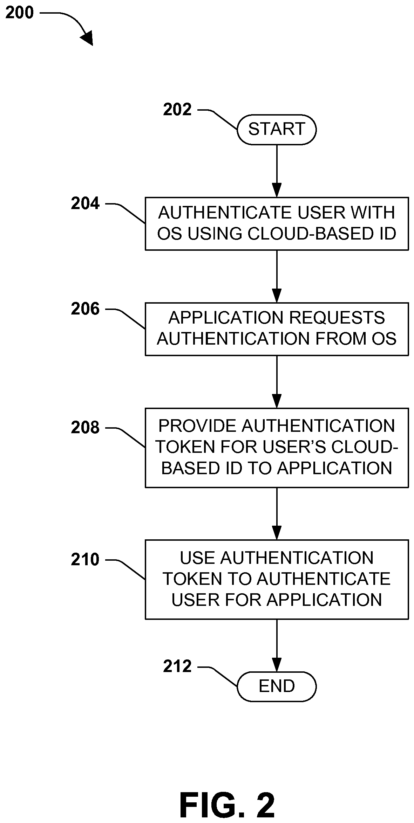

Fig. 2 is a flow diagram of an exemplary method 200 for authenticating a user of an application using an operating system. The exemplary method 200 begins at 202 and involves authenticating the user with the operating system (OS) using a cloud-based identity for the user, at 204. For example, the user may have one or more cloud-based identities (e.g., identities used to authenticate the user with one or more websites, email services, online services, social sites, web-content aggregation sites, etc.) that comprise authentication information for the user, such that the user can be securely authenticated. Often, cloud-based identities utilize a user identity and an associated secret shared key (e.g., password) to authenticate the user. Other authentication techniques can be used, and/or additional security measures may be employed, such as security questions, images, human interactive proofs (HIPs), and others.

At 206, the application makes a request to the OS for authentication of the user. For example, a device used by the user may comprise an OS, where the user has authenticated with the OS, such as when the user logged onto the device. In this example, the when the user powered up the device, they may have been prompted to authenticate with their cloud-based identity. Further, when the user attempts to access an application on the device (e.g., an application resident on the device, or an online application or service) the application can request authentication of the user from the OS on the device (e.g., instead of communicating with the online service providing the cloud-based identity for the user).

At 208, an authentication token is provided to the application, where the authentication token is indicative of the user's cloud-based identity. An authentication token can comprise a software-based security token that may be used to substantiate the user's identity programmatically. The authentication token may act as security key providing user authentication to the application, for example, without having to enter the user's identity and password. For example, the OS may provide an authentication token upon request from the application where the token is generated locally (e.g., on the user device) or remotely (e.g., by the cloud-based service associated with the user's identity). In one embodiment, the token may be generated merely for use by the application.

At 210, the authentication token is used by the application to authenticate the user for the application. For example, once the user logs onto their device using their cloud-based identity (e.g., fabrikam.com login credentials) the user may be automatically (e.g., programmatically) authenticated with applications (e.g., device-based applications, websites, online services, web-based applications, etc.) that the user accesses. In this example, when the user attempts to access the application the authentication token indicative of the user's cloud-based identity can be provided to the application, and the user can access the application without having to enter additional authentication credentials for the application. Further, in this example, it may not be necessary for the application to communicate with the cloud-based identity provider (e.g., "Fabrikam") to request authentication for the user.

Having used the authentication token to authenticate the user for the application, the exemplary method 200 ends at 212.

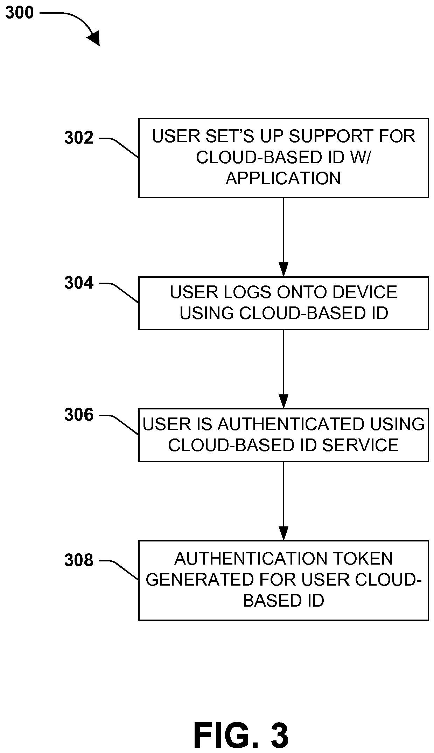

Fig. 3 is a flow diagram illustrating one embodiment 300 where one or more portions of one or more techniques described herein may be implemented. At 302, a user set's up support for a cloud-based identity associated with the user with an application. In one embodiment, the user can register their cloud-based identity with an Internet-based service for the application. For example, a first website (e.g., contoso.com) may provide for users to utilize identities from one or more second websites (e.g., fabrikam.com) to log into the first website. In this way, in this example, the user may be able to register their identity from the second website for use with the first website for authentication.

At 304 in the example embodiment 300, the user logs onto their device using the user's cloud-based identity. Commonly, when a user powers up a device the operating system asks the user to provide an identity to associate with
the user, and/or for authentication of the user. In one embodiment, a strong authentication protocol may be utilized to log the user into the device. For example, a strong authentication may comprise two-factor authentication by providing at least two elements associated with the user identity (e.g., or multi-factor authentication), such as a username and a shared secret (e.g., or shared secrets). As another example, strong authentication may comprise some sort of sharing of a cryptographic key, or other challenge-response authentication scheme.

In this embodiment, the user logs onto the device with their cloud-based identity, such as from fabrikam.com (e.g., comprising a username and password authentication). At 306, the user can be authenticated using a cloud-based identity service associated with the user's cloud-based identity. In one embodiment, the operating system can provide a login user interface (UI) for the user of the device, and the OS can communicate with the cloud-based identity service to authenticate the user for the cloud-based identity, for example, using the information entered into the Ul.

In one embodiment, the authentication of the user can comprise a strong authentication, as described above, such as a username and password associated with the cloud-based identity (e.g., from fabrikam.com). As an example, the user can log onto the client device with strong authentication information, the login information can be communicated to the cloud-based identity service, the cloud-based identity service can authenticate the user, and the cloud-based identity service can indicate to the OS that the user is authenticated for the input identity.

Further, in one embodiment, after the user has logged in with the cloud based identity, one or more browser cookies may be updated in the browser(s), for example, running on the user's device. For example, the updated browser cookie can indicate that the user is now signed into fabrikam.com. Such use of one or more cookies, may provide an indication that an automated authentication, for example, doesn't always have to rely on an application making the authentication request to retrieve an authentication token from the OS, and may merely use the updated browser cookie to identify that the user is logged on with the cloud-based identity service.

At 308, upon authentication of the user (e.g., by the cloud-based identity service), the authentication token can be generated for the user's cloud-based identity. For example, when the OS receives confirmation that the user logging onto the device is authenticated for their cloud-based identity, the OS can have the authentication token generated. In one embodiment, the authentication token may be generated by a program running in the OS. In another embodiment, the authentication token may be generated by the cloud-based identity service and retrieved by the OS on the device.

In one embodiment, registering the user's cloud-based identity with an Internet-based service for the application may comprise the Internet-based service for the application communicating with the cloud-based identity service associated with the user's cloud-based identity. For example, the user can request authentication to the first website by providing login credentials for the second website, and the first website can communicate with the second website to request user authentication. Further, in this example, if the user is authenticated with the second website, the second website may respond with an indication that the user is authenticated. In one embodiment, the registration with the Internet-based service for the application can be performed merely one time, for example, and the user may remain registered with the Internet-based service for the application using the user's cloud-based identity (e.g., once the user is registered they do not need to re-register at a later time).

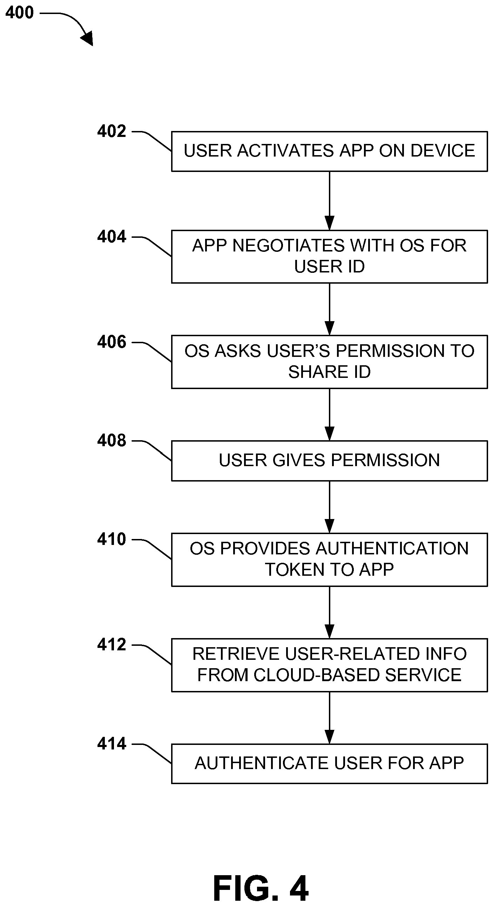

Fig. 4 is a flow diagram illustrating one embodiment 400 where one or more portions of one or more techniques described herein may be implemented. At 402, the user activates an application on the device, where the user may have previously logged into the device using their cloud-based identity. Activating an application on the device can comprise opening a program resident on the device (e.g., starting media player, where at least a portion of the player's programming is stored locally on the client device); opening a web-browser program and navigating to a web-site; starting a web-based application (web-app) from a web-site (e.g., or starting the web-app from the device's desktop that is linked to a remote server serving the web-app); or activating some form of programming from the user's device, for example.

At 404, the application activated by the user can negotiate with the OS for authentication of the user, such as using the user's cloud-based ID. In one embodiment, the application may determine, and/or the OS may identify, that the user's cloud-based identity is not supported by the application and/or that the user has not authorized the application to use the user's cloud-based identity, for example. In this embodiment, an authentication token may not be provided to the application, for example, unless support is set up for the user's ID, as described above (e.g., 302 of Fig. 3). As an example, if, during negotiation, the ID is found to not be supported by the application, a dialog box UI may be displayed that guides the user to setting up the cloud-based ID for use with the application.

In one embodiment, the negotiation may comprise identifying support for the user's ID with the application (e.g., user has already set up support), and the application asking the OS for authentication of the user. At 406, upon request from the application to access the user's ID, the OS can ask the user's permission to share their cloud-based ID with the application, such us in a UI dialog box. In this way, for example, merely those applications authorized by the user can access the user's authentication token. For example, malicious users, and/or programs may wish to access the user ID and associated information, such as to perform malicious actions. In this example, explicit permission provided by the user may mitigate malicious attacks.

At 408, the user can give permission for the application to access the user's cloud-based ID, such as by selecting a "Yes" button in a permission Ul dialog box. At 410, if the user authorizes access to the user's cloud-based identity, the authentication token can be provided to application. In one embodiment, the authentication token may be generated, such as by the OS, or retrieved, such as from the cloud-based ID service upon request from the application. For example, while the OS may store the authorization token that was generated when the user was authenticated by the OS, alternately, the token can be created merely when the application requests user authentication. Further, the authentication token may be provided merely if the application supports the user's cloud-based ID.

In another embodiment, the requesting of an authorization token from the application can comprise the application asking the operating system for the identity of a user logged onto a client device comprising the application. For example, instead of requesting authentication permission for a specific user, the application may merely want to authenticate the user that has logged onto the device. In this example, the user can log into the device, and the device OS can authenticate the user. When the application is activated, the application may merely ask the OS for the ID of the user that is logged in, for example, thereby not interacting with the user. In this embodiment, the operating system can respond with the user's cloud-based identity, and the application can use the user's cloud-based identity to authorize the user for the application.

At 412, user-related information can be retrieved from the cloud-based identity service upon authentication of the user. For example, user-related information may comprise identifying information about the user and metadata that can be used for verifying the integrity of a message, such as using a secret key associated with an online presence for the application, to determine whether the message has been tampered with. In this example, once the user is authenticated, the application may periodically or continuously communicate with a remote server linked to the application (e.g., application provider), and the user's identifying information and metadata may be used as part of the secret key to mitigate malicious hacking.

As another example, other user-related information may be provided that can help the application provide an improved user experience, such as preferences, history of use, address, media used/stored, contacts, favorite websites, email information, calendar, etc. Alternately, the user-related information may be retrieved from the cloud-based ID service when the user authenticates with the OS, for example, and the OS can provide the information to the application (e.g., if given permission by the user).

At 414, the authentication token can be used by the application to authenticate the user. For example, the application may have a trusted relationship with the OS, and the authentication token can comprise a representation by the OS that the user is actually who they say they are. Further, for example, as the application has been set up to support the user's cloud-based ID for authentication purposes, the authentication token can comprise a representation that the user's cloud-based ID has been authenticated by the OS. In one embodiment, the application may be accessed by the user upon accepting of the authentication token by the application.

A system may be devised where a user can sign on to a device, such as a laptop, smartphone, handheld computer, desktop, etc., for example. The user may use a cloud-based identity that was previously set up by the user to log onto the device, and the operating system of the device can authenticate the user with that ID. The operating system can communicate with a service provider of the user's cloud-based ID to authenticate the user on the device, and when an application asks for the user's credential, for example, the operating system can provide the application with the user's cloud-based ID for authentication to the application.

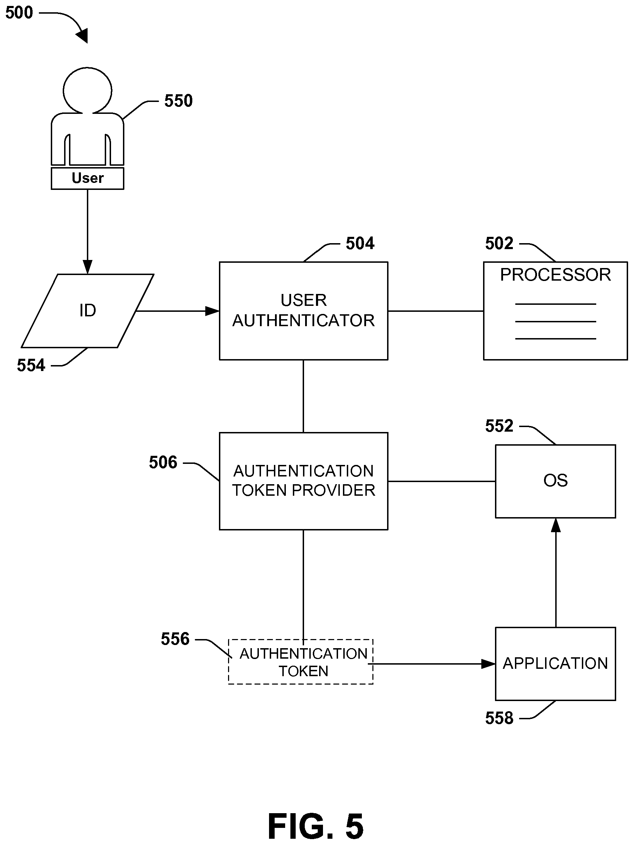

Fig. 5 is a component diagram of an exemplary system 500 for authenticating a user of an application 558 using an operating system 552. A computer-based processor 502 is configured to process data for the system, and is operably coupled with a user authentication component 504. The user authentication component 504 authenticates the user 550 with the operating system 552 using a cloud-based identity 554 associated with the user 550. For example, the user may have a cloud-based identity (ID) that is registered with a cloud-based ID service (e.g., on a social network, email service, or some other online service). In this example, the cloud-based ID service may have already done what is needed to authenticate the user, therefore, the cloud-based identity 554 can be used by the user to authenticate the user with the OS 552 on a device (e.g., when they log onto the device).

An authentication token providing component 506 is operably coupled with the user authentication component 504 and the operating system 552. The authentication token providing component 506 provides an authentication token 556 to the application 558 upon request to the operating system 552 (where the request originates from the application 558). The authentication token 556 is based on the user's cloud-based identity 554 and is used to authenticate the user for the application 558. For example, if the user's online ID 554 is authenticated by the authentication component 504 for the operating system 552, the authentication token providing component 506 can use the authentication token 556 to let the application 558 know that the user is authenticated. In this example, when the application requests authentication for the user 550 from the operating system 552, the authentication token 556 can provide the requested authentication.

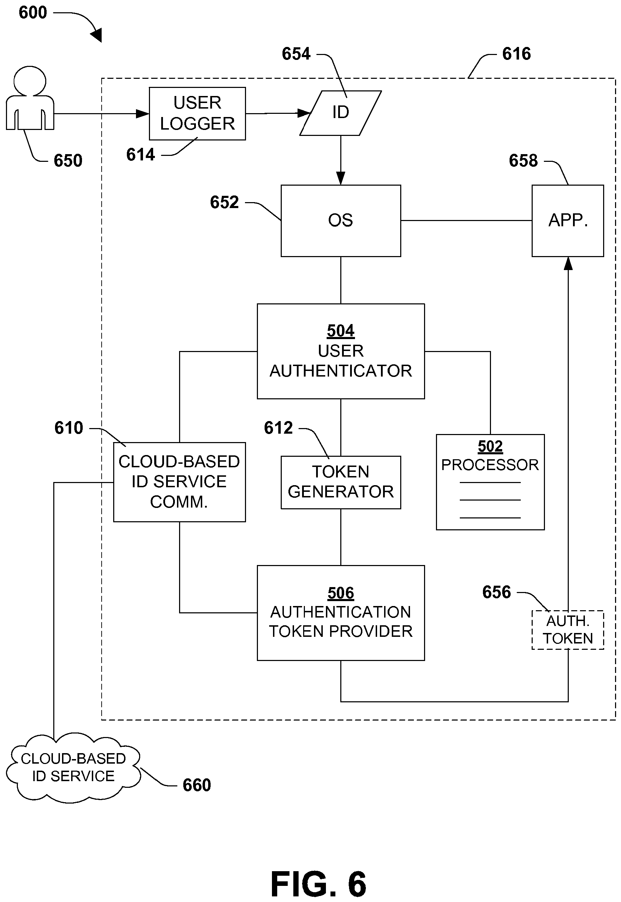

Fig. 6 is a component diagram illustrating one embodiment 600 where one or more systems described herein may be implemented. In this example, an extension of Fig. 5 is provided and thus description of elements, components, etc. described with respect to Fig. 5 may not be repeated for simplicity. A cloud-based identity service communication component 610 can communicate with a cloud-based identity service 660 that is associated with cloud-based identity of the user 650 (e.g., provided and/or maintains the user's ID). The cloud-based identity service communication component 610 can authenticate the user for the cloud-based identity, and/or may retrieve user-related information from the cloud-based identity service 660 upon authentication of the user 650. For example, when the user 650 logs onto a device with their cloud-based ID 654, the user authentication component 504 may utilize the cloud-based identity service communication component 610 to authenticate the ID with the cloud-based identity service 660 associated with the ID 654, and may also retrieve user-related information, such as identity information, for example, from the cloud-based identity service 660.

An authentication token generation component 612 can generate the authentication token 656 that is associated with the user's cloud-based identity 654 when the user 650 is authenticated by the user authentication component 504. A user log-in component 614 can retrieve user log-in credentials for the operating system 652, which may be used to authenticate the user's cloud-based identity 654 for the operating system 652. For example, when the user powers on the device comprising the operating system 652 a login dialog user interface (Ul) may be provided for the user to log in (e.g., with a username and password associated with their online ID). In this example, the user log-in component 614 can retrieve the log in information (e.g., and may provide the login Ul) and pass it to the user authentication component 504.

The user authentication component 504 can be comprised in a client device 616 that is operated by the user 650 and can be configured to obtain the user's cloud-based identity 654 based at least in part upon a user log-in to the client device 616. For example, the client device 616 can comprise components that enable the user to log onto the device, such as using a log-in UI provided by the user log-in component 614, with their cloud-based ID 654, and the cloud-based ID 654 can be authenticated by the user authentication component 504 on the device. In this way, for example, an application 658 resident on the device 616 (e.g., or accessed remotely by the device 616) can use the authentication by the OS 652 locally to authenticate the user to access the application, while not having to ask the user to log in a second time.

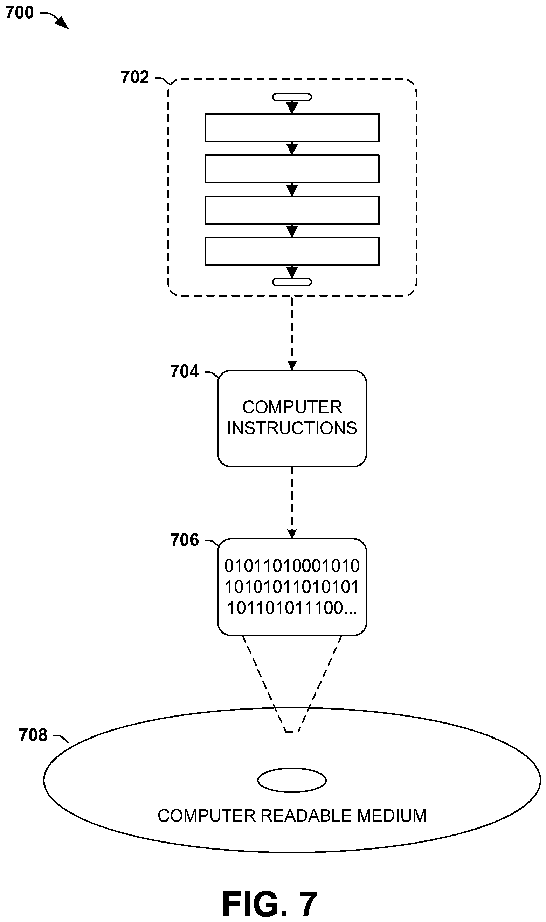

Still another embodiment involves a computer-readable medium comprising processor-executable instructions configured to implement one or more of the techniques presented herein. An exemplary computer-readable medium that may be devised in these ways is illustrated in Fig. 7, wherein the implementation 700 comprises a computer-readable medium 708 (e.g., a CD-R, DVD-R, or a platter of a hard disk drive), on which is encoded computer-readable data 706. This computer-readable data 706 in turn comprises a set of computer instructions 704 configured to operate according to one or more of the principles set forth herein. In one such embodiment 702, the processor-executable instructions 704 may be configured to perform a method, such as at least some of the exemplary method 200 of Fig. 2, for example. In another such embodiment, the processor-executable instructions 704 may be configured to implement a system, such as at least some of the exemplary system 500 of Fig. 5, for example. Many such computer-readable media may be devised by those of ordinary skill in the art that are configured to operate in accordance with the techniques presented herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

As used in this application, the terms "component," "module," "system", "interface", and the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, carrier, or media. Of course, those skilled in the art will recognize many modifications may be made to this configuration without departing from the scope of the claimed subject matter.

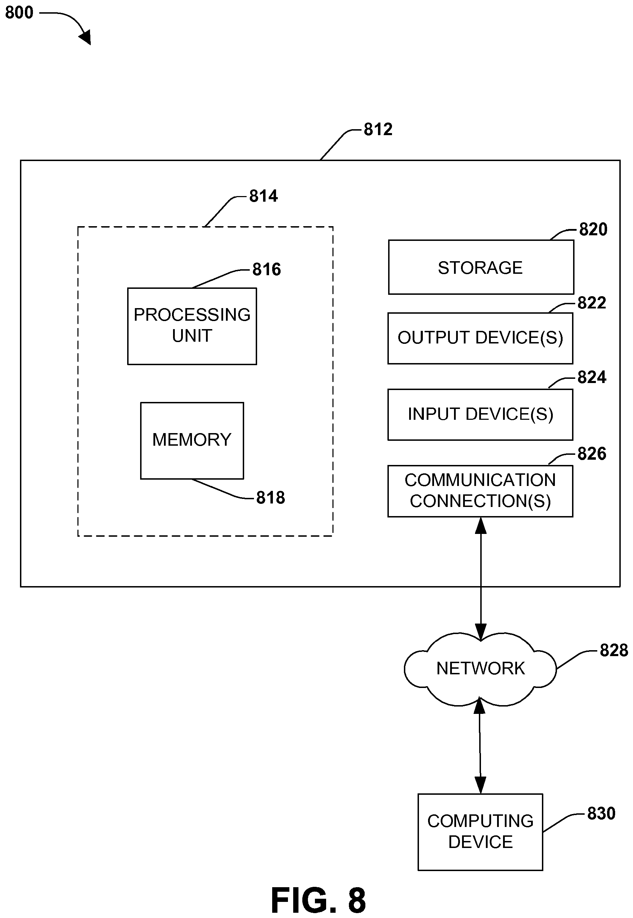

Fig. 8 and the following discussion provide a brief, general description of a suitable computing environment to implement embodiments of one or more of the provisions set forth herein. The operating environment of Fig. 8 is only one example of a suitable operating environment and is not intended to suggest any limitation as to the scope of use or functionality of the operating environment. Example computing devices include, but are not limited to, personal computers, server computers, hand-held or laptop devices, mobile devices (such as mobile phones, Personal Digital Assistants (PDAs), media players, and the like), multiprocessor systems, consumer electronics, mini computers, mainframe computers, distributed computing environments that include any of the above systems or devices, and the like.

Although not required, embodiments are described in the general context of "computer readable instructions" being executed by one or more computing devices. Computer readable instructions may be distributed via computer readable media (discussed below). Computer readable instructions may be implemented as program modules, such as functions, objects, Application Programming Interfaces (APIs), data structures, and the like, that perform particular tasks or implement particular abstract data types. Typically, the functionality of the computer readable instructions may be combined or distributed as desired in various environments.

Fig. 8 illustrates an example of a system 810 comprising a computing device 812 configured to implement one or more embodiments provided herein. In one configuration, computing device 812 includes at least one processing unit 816 and memory 818. Depending on the exact configuration and type of computing device, memory 818 may be volatile (such as RAM, for example), non-volatile (such as ROM, flash memory, etc., for example) or some combination of the two. This configuration is illustrated in Fig. 8 by dashed line 814.

In other embodiments, device 812 may include additional features and/or functionality. For example, device 812 may also include additional storage (e.g., removable and/or non-removable) including, but not limited to, magnetic storage, optical storage, and the like. Such additional storage is illustrated in Fig. 8 by storage 820. In one embodiment, computer readable instructions to implement one or more embodiments provided herein may be in storage 820. Storage 820 may also store other computer readable instructions to implement an operating system, an application program, and the like. Computer readable instructions may be loaded in memory 818 for execution by processing unit 816, for example.

The term "computer readable media" as used herein includes computer storage media. Computer storage media includes volatile and nonvolatile, removable and non-removable media implemented in any method or technology for storage of information such as computer readable instructions or other data. Memory 818 and storage 820 are examples of computer storage media. Computer storage media includes, but is not limited to, RAM, ROM, EEPROM, flash memory or other memory technology, CD-ROM, Digital Versatile Disks (DVDs) or other optical storage, magnetic cassettes, magnetic tape, magnetic disk storage or other magnetic storage devices, or any other medium which can be used to store the desired information and which can be accessed by device 812. Any such computer storage media may be part of device 812.

Device 812 may also include communication connection(s) 826 that allows device 812 to communicate with other devices. Communication connection(s) 826 may include, but is not limited to, a modem, a Network Interface Card (NIC), an integrated network interface, a radio frequency transmitter/receiver, an infrared port, a USB connection, or other interfaces for connecting computing device 812 to other computing devices. Communication connection(s) 826 may include a wired connection or a wireless connection. Communication connection(s) 826 may transmit and/or receive communication media.

The term "computer readable media" may include communication media. Communication media typically embodies computer readable instructions or other data in a "modulated data signal" such as a carrier wave or other transport mechanism and includes any information delivery media. The term "modulated data signal" may include a signal that has one or more of its characteristics set or changed in such a manner as to encode information in the signal.

Device 812 may include input device(s) 824 such as keyboard, mouse, pen, voice input device, touch input device, infrared cameras, video input devices, and/or any other input device. Output device(s) 822 such as one or more displays, speakers, printers, and/or any other output device may also be included in device 812. Input device(s) 824 and output device(s) 822 may be connected to device 812 via a wired connection, wireless connection, or any combination thereof. In one embodiment, an input device or an output device from another computing device may be used as input device(s) 824 or output device(s) 822 for computing device 812.

Components of computing device 812 may be connected by various interconnects, such as a bus. Such interconnects may include a Peripheral Component Interconnect (PCI), such as PCI Express, a Universal Serial Bus (USB), firewire (IEEE 1394), an optical bus structure, and the like. In another embodiment, components of computing device 812 may be interconnected by a network. For example, memory 818 may be comprised of multiple physical memory units located in different physical locations interconnected by a network.

Those skilled in the art will realize that storage devices utilized to store computer readable instructions may be distributed across a network. For example, a computing device 830 accessible via network 828 may store computer readable instructions to implement one or more embodiments provided herein. Computing device 812 may access computing device 830 and download a part or all of the computer readable instructions for execution. Alternatively, computing device 812 may download pieces of the computer readable instructions, as needed, or some instructions may be executed at computing device 812 and some at computing device 830.

Various operations of embodiments are provided herein. In one embodiment, one or more of the operations described may constitute computer readable instructions stored on one or more computer readable media, which if executed by a computing device, will cause the computing device to perform the operations described. The order in which some or all of the operations are described should not be construed as to imply that these operations are necessarily order dependent. Alternative ordering will be appreciated by one skilled in the art having the benefit of this description. Further, it will be understood that not all operations are necessarily present in each embodiment provided herein.

Moreover, the word "exemplary" is used herein to mean serving as an example, instance, or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, At least one of A and B and/or the like generally means A or B or both A and B. In addition, the articles "a" and "an" as used in this application and the appended claims may generally be construed to mean "one or more" unless specified otherwise or clear from context to be directed to a singular form. Also, at least one of A and B and/or the like generally means A or B or both A and B.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure. In addition, while a particular feature of the disclosure may have been disclosed with respect to only one of several implementations, such feature may be combined with one or more other features of the other implementations as may be desired and advantageous for any given or particular application. Furthermore, to the extent that the terms "includes", "having", "has", "with", or variants thereof are used in either the detailed description or the claims, such terms are intended to be inclusive in a manner similar to the term "comprising."

## Claims

1. A computer-based method for authenticating a user of an application (558) using an operating system on a user device, comprising:
authenticating (204) the user (550) with the operating system (552) using a cloud-based identity (554) for the user (550);
retrieving user-related information from a remote cloud-based identity service associated with the cloud-based identity (554);
providing (208) an authentication token (556) for the user's cloud-based identity (554) to the application (558) upon request (206)to the operating system (552), using a computer-based processor (502), said authentication token (556) generated by the operating system for use of the application (558) only;
using (210) the authentication token (556) to authenticate the user (550) for the application (558); and
providing the user-related information to the application (558).

2. The method of claim 1, providing an authentication token (556) for the user's cloud-based identity (554) to the application (558) if the application (558) supports the user's cloud-based identity (554).

3. The method of claim 1, comprising registering the user's cloud-based identity with an Internet-based service for the application (558).

4. The method of claim 1, the application (558) comprising one of:
a browser resident on a client device of the user (550) navigating to a website that requests authentication for the user (550); and
an application that is at least partially resident on the user's client device, which can communicate with a remote server, and request authentication for the user (550).

5. The method of claim 1, authenticating the user (550) comprising logging the user (550) into a client device of the user (550) using a strong authentication protocol.

6. The method of claim 1, comprising the request for the authentication token (556) received from the application (558), comprising:
the application (558) asking the operating system (552) for the identity (554) of a user (550) logged onto a client device comprising the application (558);
the operating system (552) responding with the user's cloud-based identity (554); and the application (558) using the user's cloud-based identity (554) to authorize the user (550) for the application (558).

7. A system (500) for authenticating a user (550) of an application (558) using an operating system (552), comprising:
a computer-based processor (502) configured to process data for the system (550);
a user authentication component (507), operably coupled with the processor (502), configured to authenticate the user (550) at a user device with the operating system (552) using a cloud-based identity (554) associated with the user (550);
a cloud-based identity service communication component configured to communicate with a remote cloud-based identity service, associated with the user's cloud-based identity (554), to retrieve user-related information from the cloud-based identity service upon authentication of the user (550) with the operating system; and
an authentication token providing component (506), operably coupled with the user authentication component (504) and operating system (552), configured to provide an authentication token (556) based on the user's cloud-based identity (554) to the application (558) for authenticating the user (550) for the application (558), upon request to the operating system (550), said authentication token (556) generated by the operating system for use of the application (558) only;
wherein the operating system (552) is configured to provide the user-related information to the application.

8. The system (500) of claim 7, comprising a user log-in component configured to retrieve user log-in credentials for the operating system (552), used to authenticate the user's cloud-based identity (554) for the operating system (552).

## Patentansprüche

1. Computerbasiertes Verfahren zum Authentifizieren eines Benutzers einer Anwendung (558) unter Verwendung eines Betriebssystems auf einer Benutzervorrichtung, umfassend:
Authentifizieren (204) des Benutzers (550) am Betriebssystem (552) unter Verwendung einer cloudbasierten Identität (554) für den Benutzer (550);
Abrufen benutzerbezogener Informationen von einem entfernten, cloudbasierten Identitätsdienst, der der cloudbasierten Identität (554) zugeordnet ist;
Bereitstellen (208) eines Authentifizierungstokens (556) für die cloudbasierte Identität (554) des Benutzers für die Anwendung (558) auf Anforderung (206) an das Betriebssystem (552) unter Verwendung eines computerbasierten Prozessors (502), wobei das Authentifizierungstoken (556) vom Betriebssystem nur für die Verwendung der Anwendung (558) erzeugt wird;
Verwenden (210) des Authentifizierungstokens (556), um den Benutzer (550) für die Anwendung (558) zu authentifizieren; und
Bereitstellen der benutzerbezogenen Informationen für die Anwendung (558).

2. Verfahren nach Anspruch 1, bei dem der Anwendung (558) ein Authentifizierungstoken (556) für die cloudbasierte Identität (554) des Benutzers bereitgestellt wird, wenn die Anwendung (558) die cloudbasierte Identität (554) des Benutzers unterstützt.

3. Verfahren nach Anspruch 1, umfassend das Registrieren der cloudbasierten Identität des Benutzers bei einem internetbasierten Dienst für die Anwendung (558) .

4. Verfahren des Anspruchs 1, wobei die Anwendung (558) eines der folgenden umfasst:
einen Browser, der auf einem Client-Gerät des Benutzers (550) resident ist und zu einer Website navigiert, die eine Authentifizierung für den Benutzer (550) anfordert; und
eine Anwendung, die zumindest teilweise auf dem Client-Gerät des Benutzers resident ist, die mit einem entfernten Server kommunizieren und eine Authentifizierung für den Benutzer anfordern kann (550).

5. Verfahren nach Anspruch 1, das den Benutzer (550) authentifiziert, umfassend das Anmelden des Benutzers (550) bei ein Client-Gerät des Benutzers (550) unter Verwendung eines starken Authentifizierungsprotokolls.

6. Verfahren nach Anspruch 1, umfassend die von der Anmeldung (558) empfangene Anforderung für das Authentifizierungstoken (556), umfassend:
die Anwendung (558), die das Betriebssystem (552) nach der Identität (554) eines Benutzers (550) fragt, der bei einem Client-Gerät angemeldet ist, das die Anwendung (558) umfasst;
das Betriebssystem (552), das mit der cloudbasierten Identität (554) des Benutzers antwortet; und die Anwendung (558), die die cloudbasierte Identität (554) des Benutzers verwendet, um den Benutzer (550) für die Anwendung (558) zu autorisieren.

7. System (500) zum Authentifizieren eines Benutzers (550) einer Anwendung (558) unter Verwendung eines Betriebssystems (552), umfassend:
einen computerbasierten Prozessor (502), der dazu ausgelegt ist, Daten für das System (550) zu verarbeiten;
eine Benutzerauthentifizierungskomponente (507), die operativ mit dem Prozessor (502) gekoppelt und dazu ausgelegt ist, den Benutzer (550) an einem Benutzergerät mit dem Betriebssystem (552) unter Verwendung einer dem Benutzer (550) zugeordneten, cloudbasierten Identität (554) zu authentifizieren;
eine Kommunikationskomponente für einen cloudbasierten Identitätsdienst, die dazu ausgelegt ist, mit einem entfernten cloudbasierten Identitätsdienst zu kommunizieren, der der cloudbasierten Identität (554) des Benutzers zugeordnet ist, um benutzerbezogene Informationen aus dem cloudbasierten Identitätsdienst bei der Authentifizierung des Benutzers (550) bei dem Betriebssystem abzurufen; und
eine Authentifizierungstoken-Bereitstellungskomponente (506), die operativ mit der BenutzerAuthentifizierungskomponente (504) und dem Betriebssystem (552) gekoppelt ist und dazu ausgelegt ist, der Anwendung (558) ein Authentifizierungstoken (556) basierend auf der cloudbasierten Identität (554) des Benutzers bereitzustellen, um den Benutzer (550) für die Anwendung (558) auf Anforderung an das Betriebssystem (550) zu authentifizieren, wobei das Authentifizierungstoken (556) durch das Betriebssystem nur zur Verwendung der Anwendung (558) erzeugt wird;
wobei das Betriebssystem (552) dazu ausgelegt ist, die benutzerbezogenen Informationen der Anwendung bereitzustellen.

8. System (500) nach Anspruch 7, umfassend eine Benutzer-Anmeldekomponente, die dazu ausgelegt ist, Benutzer-Anmeldezugangsdaten für das Betriebssystem (552) abzurufen, die zur Authentifizierung der cloudbasierten Identität (554) des Benutzers für das Betriebssystem (552) verwendet werden.

## Revendications

1. Procédé informatique pour authentifier un utilisateur d'une application (558) utilisant un système d'exploitation sur un dispositif utilisateur, le procédé comprend les étapes suivantes :
authentifier (204) l'utilisateur (550) avec le système d'exploitation (552) en utilisant une identité basée sur le nuage (554) pour l'utilisateur (550) ;
récupérer des informations relatives à l'utilisateur auprès d'un service d'identité à distance basé sur le nuage associées à l'identité basée sur le nuage (554) ;
fournir (208) à l'application (558) un jeton d'authentification (556) pour l'identité de l'utilisateur basée sur le nuage (554) sur demande (206) au système d'exploitation (552), en utilisant un processeur informatique (502), ledit jeton d'authentification (556) étant généré par le système d'exploitation pour l'utilisation de l'application (558) uniquement ;
utiliser (210) le jeton d'authentification (556) pour authentifier l'utilisateur (550) pour l'application (558) ; et
fournir à l'application (558) les informations relatives à l'utilisateur.

2. Procédé selon la revendication 1, fournissant à l'application (558) un jeton d'authentification (556) pour l'identité de l'utilisateur basée sur le nuage (554) si l'application (558) supporte l'identité de l'utilisateur basée sur le nuage (554).

3. Procédé selon la revendication 1, comprenant d'enregistrer l'identité de l'utilisateur basée sur le nuage avec un service basé sur Internet pour l'application (558).

4. Procédé selon la revendication 1, l'application (558) comprenant l'un des éléments suivants :
un navigateur résidant sur un dispositif client de l'utilisateur (550) naviguant vers un site web qui demande une authentification pour l'utilisateur (550) ; et
une application qui réside au moins partiellement sur le dispositif client de l'utilisateur, qui peut communiquer avec un serveur distant et demander l'authentification de l'utilisateur (550).

5. Procédé selon la revendication 1, authentifiant l'utilisateur (550) et comprenant la connexion de l'utilisateur (550) à un dispositif client de l'utilisateur (550) en utilisant un protocole d'authentification forte.

6. Procédé selon la revendication 1, comprenant la demande du jeton d'authentification (556) reçue de l'application (558), le procédé comprenant les étapes suivantes :
une demande par l'application (558) au système d'exploitation (552) de l'identité (554) d'un utilisateur (550) connecté à un dispositif client comprenant l'application (558) ;
une réponse du système d'exploitation (552) avec l'identité de l'utilisateur basée sur le nuage (554) ;
et une utilisation par l'application (558) de l'identité de l'utilisateur basée sur le nuage (554) pour autoriser l'utilisateur (550) pour l'application (558) .

7. Système (500) pour authentifier un utilisateur (550) d'une application (558) en utilisant un système d'exploitation (552), le système comprenant :
un processeur informatique (502) configuré pour traiter des données pour le système (550) ;
un composant d'authentification d'utilisateur (507), couplé de manière opérationnelle au processeur (502), configuré pour authentifier l'utilisateur (550) au niveau d'un dispositif utilisateur avec le système d'exploitation (552) en utilisant une identité basée sur le nuage (554) associée à l'utilisateur (550) ;
un composant de communication de service d'identité basée sur le nuage, configuré pour communiquer avec un service d'identité distant basé sur le nuage, associé à l'identité basée sur le nuage de l'utilisateur (554), pour récupérer les informations relatives à l'utilisateur auprès du service d'identité basé sur le nuage lors de l'authentification de l'utilisateur (550) avec le système d'exploitation ; et
un composant fournissant un jeton d'authentification (506), couplé de manière opérationnelle avec le composant d'authentification de l'utilisateur (504) et le système d'exploitation (552), configuré pour fournir à l'application (558) un jeton d'authentification (556) basé sur l'identité de l'utilisateur basée sur le nuage (554) pour authentifier l'utilisateur (550) pour l'application (558), sur demande au système d'exploitation (550), ledit jeton d'authentification (556) étant généré par le système d'exploitation pour l'utilisation de l'application (558) uniquement ;
où le système d'exploitation (552) est configuré pour fournir à l'application les informations relatives à l'utilisateur.

8. Système (500) selon la revendication 7, comprenant un composant de connexion de l'utilisateur configuré pour récupérer les informations d'identification de l'utilisateur pour le système d'exploitation (552), utilisé pour authentifier l'identité de l'utilisateur basée sur le nuage (554) pour le système d'exploitation (552) .
